# EUROPEAN PATENT SPECIFICATION

(11) **EP 0 477 963 B1**
(45) Date of publication and mention of the grant of the patent: **24.04.1996**
(21) Application number: 91116491.1
(22) Date of filing: 26.09.1991
(51) Int. Cl.: D06N 3/14

(54) **Suede-like napped sheet excellent in sweat resistance**
Wildlederartiges gerauhtes Material mit ausgezeichnetem Widerstand gegen Schweiss
Matériau ressemblant à du daim gratté résistant à la sueur

(30) Priority: 28.09.1990 JP 262419/90
(43) Date of publication of application: 01.04.1992
(73) Proprietor: Kuraray Co., Ltd., Kurashiki-shi Okayama-ken (JP)
(72) Inventor: Ashida, Tetsuya, Okayama-shi, Okayama-ken (JP); Yoneda, Hisao, Okayama-shi, Okayama-ken (JP)
(74) Representative: Kraus, Walter, Dr.

(56) References cited:
- EP-A- 0 038 202
- EP-A- 0 313 951
- FR-A- 2 086 494
- US-A- 4 302 493
- CHEMICAL ABSTRACTS, vol. 115, no. 10, 9 September 1991, Columbus, Ohio, US; abstract no. 94015b, ASHIDA, TETSUYA et al. 'Manufacture of suede-like raised fiber sheets with good color fastness and handle' page 80
- Derwent Publications Ltd., London, GB; AN 90-127461 (17) & JP-A-2 074 678 (SEHREN KK) 14 March 1990

## Description

### Detailed Description of the Invention

This invention relates to a suede-like napped sheet which is soft and excellent in hydrolysis resistance, oxidative decomposition resistance and sweat resistance, particularly among them in durability against a higher fatty acid, one of sweat components, and further has dyeability, and this suede-like napped sheet can widely be utilized in clothes, interiors, shoes, bags, etc.

### [Prior Art]

Heretofore, it has been known to obtain a suede-like napped sheet by impregnating a fibrous base material with a solution of a polymer mainly composed of a polyurethane elastomer, coagulating the polymer and napping the surface.

For example, Japanese Patent Publication No. 43475/1985 discloses a technique to obtain a napped sheet excellent in appearance and substrate performance by impregnating a fibrous base material with a polyether series polyurethane or polyester series polyurethane and coagulating the polyurethane, and Japanese Laid-Open Patent Publication No. 207675/1986 discloses a technique which comprises impregnating a fibrous base material with a polyurethane containing as a component poly(3-methylpentanediol adipate) and coagulating the polyurethane to improve its durability.

The EP-A-0 313 951 describes a polyurethane comprising a polycarbonate diol, a polyethylene glycol, a chain extender and an aromatic diisocyanate, used for coating a polyamide fiber sheet.

In recent years, in accordance with inclinations for a high-grade life, suede-like napped sheets have come to be used over a wide range including interior goods, car sheet goods, sport goods, etc. So far known suede-like napped sheets have their characteristics in feeling, hydrolysis resistance, heat deterioration resistance, tance, etc., respectively, and are used in the respective fields utilizing their own characteristics and gain public favor.

Further, as for goods which directly contact with the human body or goods which are used in contact with the human body, such as interior goods and car sheet goods, deterioration due to sweat and fat secreted from the head part, back, arms, etc. has to be taken into account, and sweat resistance has hitherto been evaluated using an artificial sweat solution.

However, recently, some cases of deterioration evaluated only in a small degree by the usual evaluation using an artificial sweat solution but considered to be clearly attributed to the sweat were reported, and the development of napped sheets fit for actual use conditions and having higher durability has been demanded.

Further, in napped sheets, it is usual to dye them in order to raise their value as goods, and in the situation it is requested that the polyurethane elastic polymer as well as the polyamide fiber have good dyeability.

Namely, in uses such that goods directly contact with the human body or are used in a state of contact with the human body, sweat resistance, particularly durability against higher fatty acids and dyeability are requested. However, no suede-like napped sheets satisfying these two characteristics at the same time have been obtained by usual techniques.

Thus, the object of this invention lies in providing a suede-like napped sheet which is excellent in sweat resistance, and at the same time has satisfying hydrolysis resistance, heat deterioration resistance, photo-deterioration resistance and dyeability, and has a good feeling.

As a result of intense study on causes of deterioration with the sweat at the time of actual use, the present inventors found that correspondence closer to the truth can be obtained by evaluation using a higher fatty acid constituting human sweat and fats.

Thus, by evaluating the durability of the sheet using such a higher fatty acid in addition to evaluation with the artificial sweat solution, the present inventors tried to develop a suede-like napped sheet satisfying usual hydrolysis resistance, heat deterioration resistance and photo-deterioration resistance and at the same time excellent in dyeability and sweat resistance, and completed this invention.

Namely, this invention relates to
1. A suede-like napped sheet which comprises a polyamide ultrafine fiber and a polyurethane composed of a polymer diol, an organic diisocyanate and a low molecular weight chain extender, said polyurethane being impregnated to have a sponge-like shape, and which has naps of polyamide ultrafine fiber on its surface, which is characterized in that the polyurethane elastic polymer comprises a polyurethane mixture composed of a polyurethane wherein the polymer diol component is a polycarbonate diol while the diisocyanate component is an aromatic diisocyanate, and a polyurethane wherein the polymer diol component is a polyethylene glycol while the diisocyanate component is an aromatic diisocyanate, or a polyurethane wherein the polymer diol component comprises a polycarbonate diol and a polyethylene glycol while the diisocyanate component is an aromatic diisocyanate,
   and that the polyurethane elastic polymer has, when determined as a film with a thickness of 90 to 110 µm which is dyed with a green series cobalt-containing dye, and which contains no polyamide ultrafine fiber, a strength retention ratio of 60 % or more after 6 weeks at 110°C, and a strength retention ratio of 60 % or more after 6 weeks at 70°C and 95 % RH, and that the polyurethane elastic polymer has, when determined as a film with a thickness of 90 to 110 µm which contains no polyamide ultrafine fiber, an area swelling ratio of 10 % or less after 2 hours immersed in oleic acid of 25°C.
2. The suede-like napped sheet of the above 1 wherein a polyurethane elastic polymer is a polyurethane obtained by mixing a polyurethane (A) composed of a polymer diol mainly composed of a polycarbonate having a molecular weight of 500 to 3,000, a low molecular weight diol chain extender having 2 to 6 carbon atoms and/or a diamine chain extender, and an aromatic diisocyanate, with a polyurethane (B) composed of a polymer diol mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (A)/(B) becomes 80/20 to 97/3, and
3. The suede-like napped sheet of the above 1 wherein the polyurethane eleastic polymer is a polyurethane obtained by copolymerizing a polymer diol (a) mainly composed of a polycarbonate having a molecular weight of 500 to 3,000, a polymer diol (b) mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (a)/(b) becomes 80/20 to 97/3.

The polyamide ultrafine fiber of this invention is a fiber having an average fineness of 0.2 denier or less, preferably 0.005 to 0.1 denier, and can be prepared from a so far known polyamide multicomponent fiber capable of forming an ultrafine fiber comprising two or more polymer components including a polyamide. In the polyamide multicomponent fiber capable of forming an ultrafine fiber of the invention, the polyamide is at least one polyamide selected from 6-nylon, 66-nylon, 610-nylon, 11-nylon, 12-nylon, 20-nylon, 210-nylon, 410-nylon, 76-nylon and further a polyamide capable of spinning having aromatic rings. On the other hand, the other polymer constituting the fiber capable of forming an ultrafine fiber is a polymer which differs from the polyamide in solubility in a solvent, has a small affinity with the polyamide at the time of melting, and further has a smaller melt viscosity or surface tension than that of the polyamide under the spinning conditions, and such a polymer is at least one polymer selected from polymers such as, for example, polyethylene, polypropylene, an ethylene-propylene copolymer, an ethylene-octene copolymer, an ethylene vinyl acetate copolymer, polystyrene, a styrene-acrylonitrile copolymer, a styrene-ethylene copolymer and a polyester. A polyamide multicomponent fiber capable of forming an ultrafine fiber wherein the polyamide component is 40 to 80 wt % of the fiber and the number of the polyamide ultrafine fiber component therein is 5 or more, preferably in the range of 50 to 800, can be obtained by ① mixing the polyamide with the other polymer in a predetermined mixing ratio to melt them in a single melting system and spinning using the formed mixed system, by ② carrying out spinning by melting the polyamide and the other polymer in separate melting systems, respectively and repeating plural times combining and division at the spinning head to form a mixed system, or by ③ carrying out spinning by melting the polyamide and the other polymer in separate dissolution systems, respectively and defining the fiber shape at the spinneret part. The resulting multicomponent fiber capable of forming an ultrafine fiber is, if necessary, subjected to usual treatment steps for fiber such as stretching and heat fixation to afford a fiber having a fineness of 2 to 15 deniers and an average fineness (calculated value) of the polyamide ultrafine fiber component of 0.2 denier or less, preferably 0.005 to 0.1 denier.

The resulting fiber capable of forming the ultrafine fiber is carded, passed through a webber to form a random web or crosslap web, and the obtained fiber web is laminated to the predetermined weight and thickness. The fiber web is then subjected to fiber entangling treatment such as needle punch to afford an entangled fibrous mat. The punch number of the needle punch is usually in the range of 200 to 2,500 punches/cm, and in view of stretchability and fullness, it is preferred for the entanglement of fiber to be sufficiently carried out.

The entangled fibrous mat is then impregnated with an elastic polymer solution and the polymer is coagulated. The polyurethane elastic polymer to be contained in the entangled fibrous mat is a polyurethane elastic polymer which has, in a state of a film 90 to 110 µm thick dyed with a green dyestuff-containing cobalt dye, a strength retention ratio of 60 % or more after 6 weeks at 110°C, a strength retention ratio of 60 % or more after 6 weeks at 70°C and a relative humidity (RH) of 95 %, and an area swelling ratio of 10 % or less. When the strength retention ratio is less than 60 %, deterioration due to heat or hydrolysis during the use is large and durability is not sufficient as is seen, e.g., by the generation of pilling on the surface. Further, when the area swelling ratio in oleic acid exceeds 10 %, deterioration due to fatty acids contained in the sweat stuck during the use is large and durability is, likewise, insufficient. Therefore, the polyurethane elastic polymer to be used for impregnation in the invention is required to satisfy the above conditions.

Such a polyurethane elastic polymer is a polyurethane obtained by mixing a polyurethane (A) composed of a polymer diol mainly composed of a polycarbonate having a molecular weight of 500 to 3,000, a low molecular weight diol having 2 to 6 carbon atoms, and an aromatic diisocyanate, with a polyurethane (B) composed of a polymer diol mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (A)/(B) becomes 70/30 to 97/3, preferably 75/25 to 90/10; or a polyurethane obtained by copolymerizing a polymer diol (a) mainly composed of a polycarbonate having a molecular weight of 500 to 3,000, a polymer diol (b) mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (a)/(b) becomes 70/30 to 97/3, preferably 75/25 to 90/10. Examples of the polymer diol mainly composed of a polycarbonate are poly(hexane carbonate), poly(2-methyl-1,8-octane carbonate) poly(1,9-nonane carbonate), etc. Further, examples of the low molecular weight diol chain extender having 2 to 6 carbon atoms are ethylene glycol, propylene glycol, butanediol, hexanediol, 3-methyl-1,5-pentanediol, hexanediol, 1,4-cyclohexanediol, pentanediol, etc. Examples of the diamine chain extender are ethylenediamine, propylenediamine, hexamethylenediamine, 4,4'-diaminodicyclohexylmethane, 4,4'-diaminodiphenylmethane, isophoronediamine, xylylenediamine, hydrogenated xylylenediamine, etc. Examples of the aromatic isocyanate are 4,4'-diphenylmethane diisocyanate, tolylene diisocyanate, phenylene diisocyanate, xylylene diisocyanate, etc. In the invention an aliphatic diisocyanate is not preferred because of poor sweat resistance.

The ratio of the polyurethanes (A) and (B) or the ratio of the polymer diols (a) and (b) is (A)/(B) = 70/30 to 97/3 or (a)/(b) = 70/30 to 97/3. When the ratio of the component (B) or (b) becomes larger than 30, dyeability increases but heat deterioration resistance degrades, and when the ratio becomes lower than 3, heat deterioration resistance increases but dyeability degrades, and both cases are unsuitable for the object of the invention.

As examples of a solvent of the polyurethane, there can, for example, be mentioned dimethylformamide, dimethylacetamide, N-methylpyrrolidone, dimethylsulfoxide, etc., but dimethylformamide is preferred in view of easiness of handling.

Then, a sheet base material is prepared according to a wet coagulation method which comprises impregnating the entangled fibrous mat with a polymer solution obtained by dissolving or dispersing a polymer mainly composed of the elastic polymer in a solvent or dispersion medium respectively, or a polymer composition solution obtained by compounding additives selected from a coloring agent, a coagulation controlling agent, a mold releasing agent, a plasticizer, a stabilizer, an anti-oxidant, a photo-resistant stabilizer, etc. in the above polymer solution, and treating the resulting mat with a nonsolvent of the polymer to coagulate it; a dry coagulation method which comprises coagulating the above polymer solution or polymer composition solution-impregnated entangled fibrous mat by heating the mat to remove the solvent or dispersion medium; or a method comprising a combination of the above methods. The resulting sheet base material is, if necessary, washed and dried. The fiber capable of forming the ultrafine fiber is changed into a polyamide ultrafine fiber by being treated with a solvent of the other polymer constituting the fiber either before or after impregnating the entangled fibrous mat with the polymer composition solution. The amount of the polyurethane or polyurethane composition based on the sheet base material is in the solid base in the range of 10 to 50 wt %, preferably 15 to 40 wt %. When the content of the polymer mainly composed of the polyurethane in the sheet base material is out of the above range, the resulting sheet base material lacks fullness and a swelling feeling and elastic behavior becomes large, and is thus not preferred.

This sheet is then, if necessary, divided in the thickness direction to a predetermined thickness, and at least one side thereof is subjected to napping treatment, coloring treatment and softening treatment to nap the fiber on the surface, whereby a suede-like napped sheet is obtained.

The sheet obtained by the invention has a stable sponge structure, as a feeling excellent in flexibility, are excellent in hydrolysis resistance, heat deterioration resistance and sweat resistance, and further has good dyeability.

### [Examples]

This invention is specifically described below by examples.

The parts and % in examples mean weight parts and weight % unless otherwise noted.

### [Evaluation method]

Various evaluations in the present examples were made according to the following methods. [Evaluation of a polyurethane composition]

Method for preparing a sample for evaluation: a polyurethane composition solution is cast on a glass plate, dimethylformamide is evapolated to give a dry film 90 to l10µm thick, and the film is dyed with a 1 % o.w.f. solution of a green series cobalt metal complex salt dye (Irgalan Green GL) at a bath ratio of 1:100 and 70°C for 10 minutes.
1. Hydrolysis resistance: The dyed film was held at 70°C and 95 % RH (relative humidity) for 6 weeks, and discoloration and strength change after the treatment were evaluated according to the following 4 grades.
   ⓞ No change both in appearance and in strength
   ○ There is slight discoloration but strength retention ratio is 60 % or more
   Δ Discoloration is large but strength retention ratio is 60 % or more
   X Strength retention ratio is less than 60 %
2. Heat deterioration resistance: The dyed film was subjected to dry heat treatment at 110°C for 6 weeks, and discoloration and strength change after the treatment were evaluated by 4 grades likewise in the hydrolysis resistance.
3. Oleic acid resistance: The film before the dyeing was cut into 5 cm square and immersed in oleic acid of 25°C. Oleic acid resistance is represented by the area swelling ratio (%) after 2 hours.

### [Evaluation of a napped sheet]

1. Photo-deterioration resistance: Evaluated according to JIS L 0842 (irradiation with carbon arc of 63°C for 300 hours). The results were evaluated according to the following 3 grades.
   ○ Beyond grade 5
   Δ ..... Grade 4 to 5
   X .... Below grade 4
2. Sweat resistance I: The napped sheet was immersed in an artificial sweat solution for a dyeing fastness test, squeeze dried at a squeeze ratio of 70 %, dry-heated at 70°C for 3 weeks, and then loaded by 500 gf. and reciprocated 30 times using a Gakushin-type friction tester equipped with a sail cloth. Its appearance after the treatment was evaluated according to the following 3 grades.
   ○ No change is observed on the appearance
   Δ Pilling occurred at the part of the surface
   X The surface tatters
3. Sweat resistance II: The same procedure and evaluation as in Sweat resistance I were carried out except for using a 10 % oleic acid ethanol solution in place of the artificial sweat solution.
   Dyeability: The napped sheet after the dyeing and finishing was evaluated according to the following criterion.
   ⓞThe urethane is more deeply dyed compared to the fiber
   ○ The fiber and the urethane are almost uniformly dyed
   Δ The urethane is somewhat worse dyed compared to the fiber, and there is a nonuniformity feeling
   X ...,. The urethane is worse dyed compared to the fiber, and the whole looks whitish.
4. Practical test: The napped sheet was stuck on the part of the armrest of a chair and used for 2 years under average use per day of 8 hours. The appearance of the sheet after the use was evaluated according to the same criterion as in Sweat resistance I.

### Examples 1 to 7 and Comparative examples 1 to 4

Polyurethanes (A) to (F) were obtained by reacting as a polymer diol a polyhexane carbonate (a) having an average molecular weight of 2,000, a polyethylene glycol (b) having an average molecular weight of 2,000, a polytetramethylene glycol (c) having an average molecular weight of 2,000 or a polytetramethylene adipate (d) having an average molecular weight of 2,000, as a chain extender ethylene glycol (e) or xylylenediamine (f), and as a diisocyanate 4,4'-diphenylmethane diisocyanate by the respective combinations indicated in Table 1 in ratios such that the total mole number of the hydroxyl group and amino group became equal to the mole number of the isocyanato group and the nitrogen percent became 3.5 %. The solution viscosities at 30°C of 25 % dimethylformamide solutions of these polyurethanes were shown in Table 1, too. 13 % dimethylformamide solutions were prepared using these polyurethanes, respectively, and a coagulation controlling agent was added to each solution by 2 % based on the polyurethane to prepare a polyurethane composition solution.

**Table 1**

| | Polymer diol | Chain extender (mole %) | Solution viscosity (poise) |
|---|---|---|---|
| Polyurethane (A) | (a) | (e) | 300 |
| Polyurethane (B) | (a) | (e)/(f) = 50/50 | 400 |
| Polyurethane (C) | (a) | (f) | 400 |
| Polyurethane (D) | (b) | (e) | 300 |
| Polyurethane (E) | (b) | (e)/(f) = 50/50 | 400 |
| Polyurethane (F) | (b) | (f) | 400 |
| Polyurethane (G) | (c) | (e) | 300 |
| Polyurethane (H) | (d) | (e) | 300 |

The above polyurethane composition solutions were mixed so that the ratios of the solid components of the polyurethanes (A) to (H) became the ratios indicated in Table 2, whereby solutions for impregnation were obtained.

A web was prepared using staple fibers of a multicomponent fiber obtained by melt-spinning 60 parts of 6-nylon and 40 parts of high flowable polyethylene (6-nylon is the ultrafine fiber component) and the led to a needle punch entangled fibrous mat as an entangled fibrous mat for impregnation with the polyurethane solutions. Pieces of this entangled fibrous mat were impregnated with the above solutions for impregnation, respectively. Each of the impregnated entangled fibrous mats was immersed in an aqueous 30 % dimethylformamide solution (solution temperature 40°C) for coagulation. The resulting entangled fibrous mat was held in hot toluene to remove the polyethylene component in the multi-component fiber by dissolution, washed, treated with a cationic treating agent dispersion and dried to obtain a sheet base material about 1.40 mm thick. This sheet was divided into two parts at the intermediate position of thickness, and the divided face was buffed with a sand paper to adjust the thickness to 0.56 mm. Further, the surface at the time of coagulation was treated by a buffing machine to form a napped face, and then dyeing and finishing were carried out using a green series metal complex salt dye to obtain a napped sheet having an average weight of 195 g/m.

The results of evaluation on the hydrolysis resistance, heat deterioration resistance and oleic acid resistance of the polyurethane composition constituting this napped sheet and on the sweat resistance, dyeability and the like of the napped sheet were shown in Table 2. The napped sheets of the invention had a soft feeling and appropriate fullness.

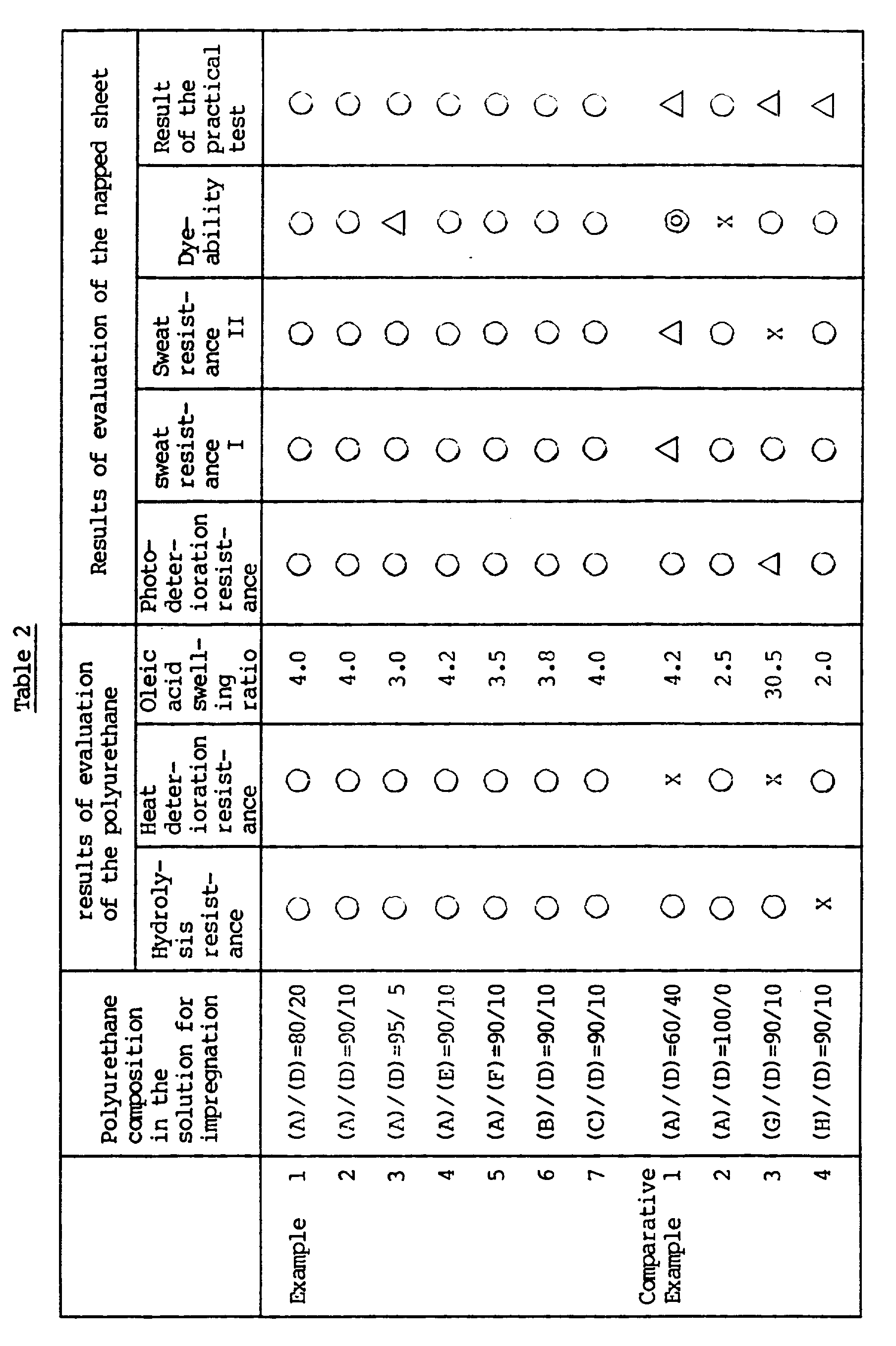

### Examples 8 to 12 and Comparative examples 5 to 7

Polyurethanes were obtained by copolymerizing as a polymer diol a polyhexane carbonate (a) having an average molecular weight of 2,000, a polyethylene glycol (b) having an average molecular weight of 2,000, a polytetramethylene glycol (c) having an average molecular weight of 2,000 or a polytetramethylene adipate (d) having an average molecular weight of 2,000, as a chain extender ethylene glycol (e) or 4,4'-diaminodiphenylmethane (g) and as a diisocyanate 4,4-diphenylmethane diisocyanate by the respective combinations indicated in Table 3 in ratios such that the total mole number of the hydroxyl group and amino group became equal to the mole number of the isocyanate group and the nitrogen percent became 3.5 %. 13 % dimethylformamide solutions were prepared using these polyurethanes, respectively, and a coagulation controlling agent was added to each solution by 2 % based on the polyurethane to prepare a polyurethane composition solution for impregnation.

**Table 3**

| | Polymer diol composition (wt %) | Chain extender composition (wt %) |
|---|---|---|
| Example 8 | (a)/(b)=80/20 | (e)/(g)=100/0 |
| 9 | (a)/(b)=90/10 | (e)/(g)=100/0 |
| 10 | (a)/(b)=95/5 | (e)/(g)=100/0 |
| 11 | (a)/(b)=90/10 | (e)/(g)=50/50 |
| 12 | (a)/(b)=95/5 | (e)/(g)=0/100 |
| Comparative example 5 | (a)/(b)=60/40 | (e)/(g)=100/0 |
| 6 | (a)/(b)=90/10 | (e)/(g)=100/0 |
| 7 | (a)/(b)=90/10 | (e)/(g)=100/0 |

The same treatments as in Example 1 were carried out using these solutions for impregnation to obtain napped sheets having an average weight of 200 g/m.

Table 4 shows the results of evaluation of the polyurethane composition constituting each of these napped sheets on hydrolysis resistance, heat deterioration resistance and oleic acid resistance and of each of the napped sheets on sweat resistance, dyeability and the like. The napped sheets of the invention had a soft feeling and appropriate fullness.

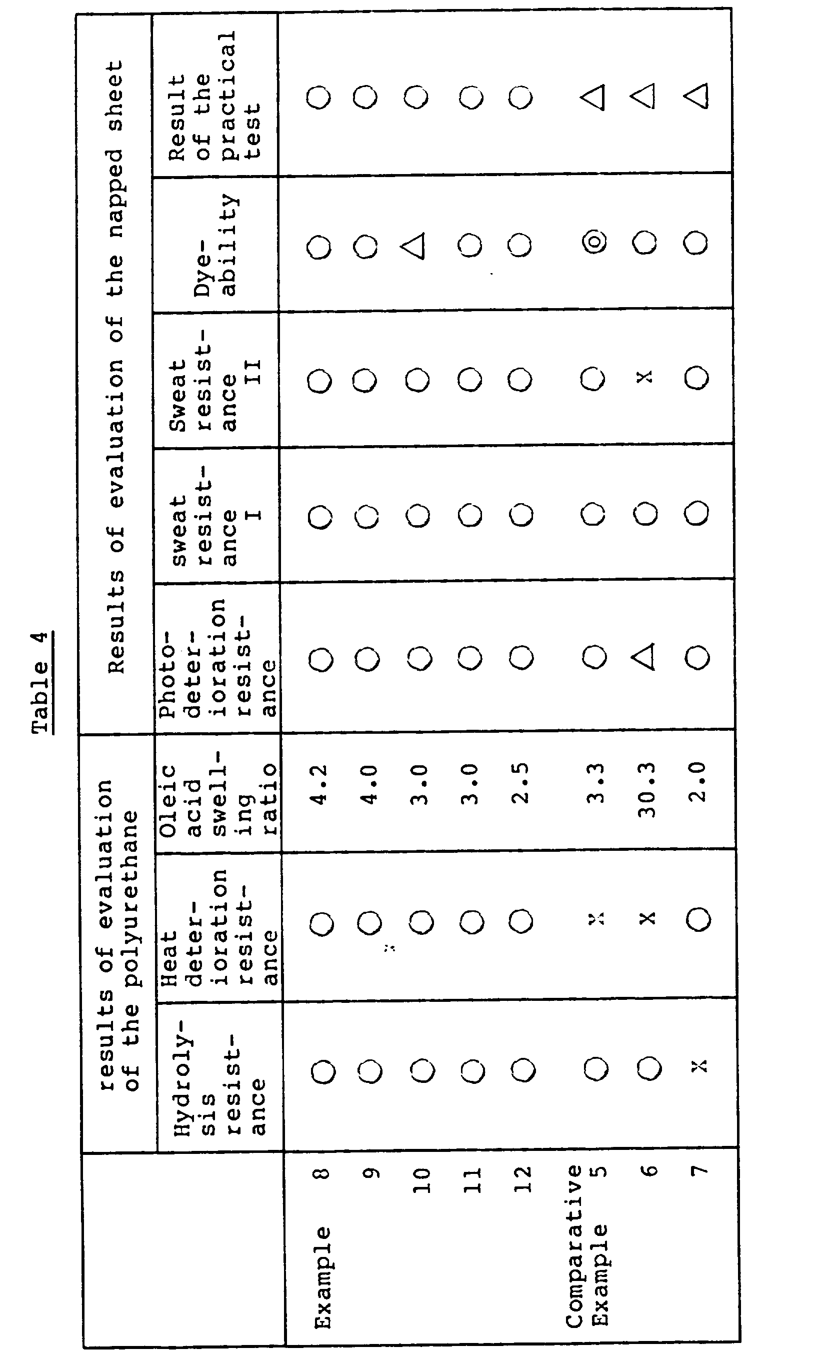

Suede-like sheets obtained by this invention are excellent in hydrolysis resistance, heat deterioration resistance and sweat resistance and good in dyeability and senses such as feeling and appearance, and are suitable for uses such clothes, interiors, sport goods, shoes, bags and other goods.

## Claims

1. A suede-like napped sheet which comprises a polyamide ultrafine fiber and a polyurethane composed of a polymer diol, an organic diisocyanate and a low molecular weight chain extender, said polyurethane being impregnated to have a sponge-like shape, and which has naps of polyamide ultrafine fiber on its surface, characterized in that the polyurethane elastic polymer comprises a polyurethane mixture composed of a polyurethane wherein the polymer diol component is a polycarbonate diol while the diisocyanate component is an aromatic diisocyanate, and a polyurethane wherein the polymer diol component is a polyethylene glycol while the diisocyanate component is an aromatic diisocyanate, or a polyurethane wherein the polymer diol component comprises a polycarbonate diol and a polyethylene glycol while the diisocyanate component is an aromatic diisocyanate, and that the polyurethane elastic polymer has, when determined as a film with a thickness of 90 to 110 µm which is dyed with a green series cobalt-containing dye, and which contains no polyamide ultrafine fiber, a strength retention ratio of 60 % or more after 6 weeks at 110°C, and a strength retention ratio of 60 % or more after 6 weeks at 70°C and 95 % RH, and that the polyurethane elastic polymer has, when determined as a film with a thickness of 90 to 110 µm which contains no polyamide ultrafine fiber, an area swelling ratio of 10 % or less after 2 hours immersed in oleic acid of 25°C.

2. The suede-like napped sheet of claim 1 wherein a polyurethane elastic polymer is a polyurethane obtained by mixing a polyurethane (A) composed of a polymer diol mainly composed of a polycarbonate having a molecular weight of 500 to 3,000, a low molecular weight diol chain extender having 2 to 6 carbon atoms and/or a diamine chain extender, and an aromatic diisocyanate, with a polyurethane (B) composed of a polymer diol mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (A)/(B) becomes 80/20 to 97/3.

3. The suede-like napped sheet of claim 1 wherein the polyurethane eleastic polymer is a polyurethane obtained by copolymerizing a polymer diol (a) mainly composed of a polycarbonate having a molecular weight of 500 to 3,000, a polymer diol (b) mainly composed of a polyethylene glycol having a molecular weight of 500 to 3,000, a low molecular weight diol chain extender having 2 to 6 carbon atoms and/or a diamine chain extender, and an aromatic diisocyanate, so that the weight ratio of (a)/(b) becomes 80/20 to 97/3.

## Patentansprüche

1. Wildlederartige gerauhte Folie, welche ultrafeine Polyamidfasern und ein Polyurethan, bestehend aus einem Polymerdiol, einem organischen Diisocyanat und einem Kettenverlängerer mit niedrigem Molekulargewicht, umfaßt, wobei das Polyurethan zum Aufweisen einer schwammartigen Form imprägniert worden ist, und welche auf ihrer Oberfläche Noppen aus ultrafeinen Polyamidfasern aufweist, dadurch **gekennzeichnet**, daß das elastische Polyurethanpolymere ein Polyurethangemisch, bestehend aus einem Polyurethan, bei dem die Polymerdiolkomponente ein Polycarbonatdiol ist, während die Diisocyanatkomponente ein aromatisches Diisocyanat ist, und einem Polyurethan, bei dem die Polymerdiolkomponente ein Polyethylenglykol ist, während die Diisocyanatkomponente ein aromatisches Diisocyanat ist, oder einem Polyurethan, bei dem die Polymerdiolkomponente ein Polycarbonatdiol und ein Polyethylenglykol umfaßt, während die Diisocyanatkomponente ein aromatisches Diisocyanat ist, umfaßt, und daß das elastische Polyurethanpolymere, wenn als Film mit einer Dicke von 90 bis 110 µm, welcher mit einem cobalthaltigen Farbstoff der Grünreihe gefärbt worden ist, und welcher keine ultrafeinen Polyamidfasern enthält, bestimmt, ein Festigkeitsbeibehaltungsverhältnis von 60 % oder mehr nach 6 Wochen bei 110°C und ein Festigkeitsbeibehaltungsverhältnis von 60 % oder mehr nach 6 Wochen bei 70°C und 95 % relativer Feuchte aufweist, und daß das elastische Polyurethanpolymere, wenn als Film mit einer Dicke von 90 bis 110 µm, welcher keine ultrafeinen Polyamidfasern enthält, bestimmt, ein Flächenquellverhältnis von 10 % oder weniger nach zweistündigem Eintauchen in Ölsäure mit einer Temperatur von 25°C aufweist.

2. Wildlederartige gerauhte Folie nach Anspruch 1, dadurch **gekennzeichnet** , daß das elastische Polyurethanpolymere ein Polyurethan ist, das durch Mischen eines Polyurethans (A), das aus einem Polymerdiol, hauptsächlich bestehend aus einem Polycarbonat mit einem Molekulargewicht von 500 bis 3.000, einem Diolkettenverlängerer mit niedrigem Molekulargewicht und 2 bis 6 Kohlenstoffatomen und/oder einem Diaminkettenverlängerer, und einem aromatischen Diisocyanat besteht, mit einem Polyurethan (B), das aus einem Polymerdiol, hauptsächlich bestehend aus einem Polyethylenglykol mit einem Molekulargewicht von 500 bis 3.000, einem Diolkettenverlängerer mit niedrigem Molekulargewicht und 2 bis 6 Kohlenstoffatomen und/oder einem Diaminkettenverlängerer, und einem aromatischen Diisocyanat besteht, so daß das Gewichtsverhältnis von (A):(B) 80:20 bis 97:3 beträgt, erhalten worden ist.

3. Wildlederartige gerauhte Folie nach Anspruch 1, dadurch **gekennzeichnet**, daß das elastische Polyurethanpolymere ein Polyurethan ist, das durch Copolymerisation von einem Polymerdiol (a), hauptsächlich bestehend aus einem Polycarbonat mit einem Molekulargewicht von 500 bis 3.000, einem Polymerdiol (b), hauptsächlich bestehend aus einem Polyethylenglykol mit einem Molekulargewicht von 500 bis 3.000, einem Diolkettenverlängerer mit niedrigem Molekulargewicht und 2 bis 6 Kohlenstoffatomen und/oder einem Diaminkettenverlängerer, und einem aromatischen Diisocyanat, so daß das Gewichtsverhältnis von (a):(b) 80:20 bis 97:3 beträgt, erhalten worden ist.

## Revendications

1. Feuille lainée à finissage en velours qui comprend une fibre polyamide ultrafine et un polyuréthanne composé d'un diol polymère, d'un diisocyanate organique et d'un agent d'allongement de chaîne de bas poids moléculaire, ledit polyuréthanne étant imprégné pour obtenir une forme spongieuse, et qui comporte des fourrures de fibres polyamide ultrafines à sa surface, caractérisé en ce que le polymère polyuréthanne élastique comprend un mélange de polyuréthannes composé d'un polyuréthanne dans lequel le constituant diol polymère est un polycarbonate diol, alors que le constituant diisocyanate est un diisocyanate aromatique, et un polyuréthanne dans lequel le constituant diol polymère est un polyéthylèneglycol, alors que le constituant diisocyanate est un diisocyanate aromatique ou un polyuréthanne dans lequel le consdtitutant diol polymère comprend un polycarbonate biol et un polyéthylène glycol alors que le constituant diisocyanate est un diisocyanate aromatique, et en ce que le polymère polyuréthanne élastique, lorsqu'il est déterminé sous forme de pellicule, a une épaisseur de 90 à 100 µm, qui est teinte par une teinture de la série des verts au cobalt et qui ne contient pas de fibres polyamides ultrafines, qui a un taux de force résiduelle de 60 % ou plus après 6 semaines à 110 °C et un taux de force résiduelle de 60 % ou plus après 6 semaines à 70 °C et une humidité relative de 95 %, et en ce que le polymère polyuréthanne élastique, déterminé sous forme de pellicule, a une épaisseur de 90 à 110 µm qui ne contient pas de fibres polyamides ultrafines, et un taux de gonflement de superficie de 10 % ou moins après 2 heures d'immersion dans l'acide oléique à 25 °C.

2. Feuille lainée à finissage en velours de la revendication 1, dans laquelle un polymère polyuréthanne élastique est un polyuréthanne obtenu par mélange d'un polyuréthanne (A) composé d'un diol polymère, composé principalement d'un polycarbonate ayant un poids moléculaire de 500 à 3000, d'un agent d'allongement de chaîne de type diol de bas poids moléculaire comportant de 2 à 6 atomes de carbone et/ou d'un agent d'allongement de chaîne de type diamine, et d'un diisocyanate aromatique, avec un polyuréthanne (B) composé d'un diol polymère principalement constitué d'un polyéthylèneglycol ayant un poids moléculaire de 500 à 3000, d'un agent d'allongement de chaîne de type diol de bas poids moléculaire comportant de 2 à 6 atomes de carbone et/ou d'un agent d'allongement de chaîne diamine et d'un diisocyanate aromatique de sorte que le rapport pondéral de (A)/(B) soit de 80/20 à 97/3.

3. Feuille lainée à finissage en velours de la revendication 1, dans laquelle le polymère polyuréthanne élastique est un polyuréthanne obtenu par copolymérisation d'un diol polymère (a) principalement composé d'un polycarbonate ayant un poids moléculaire de 500 à 3000, d'un diol polymère (b), composé principalement d'un polyéthylèneglycol ayant un poids moléculaire de 500 à 3000, d'un agent d'allongement de chaîne de type diol de bas poids moléculaire comportant de 2 à 6 atomes de carbone et/ou d'un agent d'allongement de chaîne de type diamine, et d'un diisocyanate aromatique de sorte que le rapport pondéral de (a)/(b) soit de 80/20 à 97/3.
